# EUROPEAN PATENT APPLICATION

(11) **EP 4 404 292 A1**
(43) Date of publication of application: **24.07.2024**
(21) Application number: 21954488.9
(22) Date of filing: 24.08.2021
(51) Int. Cl.: H01M 4/131, H01M 4/1391

(54) **ADHESIVE COMPOSITION, ELECTRODE MIXTURE, ELECTRODE, AND NON-AQUEOUS ELECTROLYTE SECONDARY BATTERY**

(71) Applicant: Kureha Corporation, Chuo-ku Tokyo 103-8552 (JP); Kureha (Changshu) Fluoropolymers Co., Ltd, Changshu, Jiangsu 215522 (CN); Kureha (China) Investment Co., Ltd, Shanghai 200126 (CN)
(72) Inventor: YU, Fei, Shanghai 200126 (CN); AOKI, Kenta, Shanghai 200126 (CN); SATO, Hiroshi, Tokyo 103--8552 (JP); ASHIDA, Kana, Tokyo 103--8552 (JP)
(74) Representative: Zimmermann & Partner Patentanwälte mbB
(86) International application number: PCT/CN2021/114329
(87) International publication number: WO 2023/023945

(57) **Abstract**

Provided is a binder composition in which viscosity increases of an electrode mixture slurry is prevented or reduced while a high peel strength between a current collector and an electrode mixture layer is maintained.

## Description

### Technical Field

The present invention relates to a binder composition, an electrode mixture, and a use of the binder composition and the electrode mixture, more specifically to a binder composition and an electrode mixture, an electrode, and a non-aqueous electrolyte secondary battery each of which is obtained with use of the binder composition.

### Background Art

In recent years, electronic technology development has been remarkable, and small-size mobile devices have increasingly higher performance. Thus, power supplies used in these devices are required to be smaller and lighter, i.e., to have a higher energy density. A non-aqueous electrolyte secondary battery typified by, for example, a lithium-ion secondary battery is widely used as a battery having a high energy density.

An electrode for a non-aqueous electrolyte secondary battery has a structure including a current collector and an electrode mixture layer formed on the current collector. The electrode mixture layer is formed commonly by coating the current collector with an electrode mixture, which contains an electrode active material and a binder composition, in slurry form in which the electrode mixture is dispersed in an appropriate solvent or dispersion medium, and volatilizing the solvent or the dispersion medium.

From the viewpoint of enhancing safety and performance of a battery, a binder for a non-aqueous electrolyte secondary battery is required to have high adhesion to an electrode active material and a current collector. A vinylidene fluoride-based polymer that mainly contains a repeating unit derived from vinylidene fluoride (VDF) is primarily used as a binder (binding agent) in a binder composition because the vinylidene fluoride-based polymer has high adhesion.

As an example of such a binder, Patent Literature 1 discloses a resin mixture in which two or more types of vinylidene fluoride homopolymers having different weight average molecular weights are mixed.

Patent Literature 2 discloses a binding material containing 50 weight% or greater of polyvinylidene fluoride having a weight average molecular weight of 300,000 to 400,000, relative to a total binding material amount.

Patent Literature 3 discloses a binder for forming a non-aqueous electrochemical device electrode, the binder containing: a vinylidene fluoride homopolymer (A) having an inherent viscosity of 0.5 dl/g to 1.5 dl/g; and a vinylidene fluoride polymer (B) having an inherent viscosity that is 1.4 times or greater the inherent viscosity of the polymer (A), a ratio of the polymer (A) to a total amount of the polymers (A) and (B) being in a range of 60 weight% to 98 weight%.

### Citation List

### [Patent Literature]

[Patent Literature 1]
   Japanese Patent Application Publication Tokukai No. 2008-243643
[Patent Literature 2]
   Japanese Patent Application Publication Tokukai No. 2006-107753
[Patent Literature 3]
   Japanese Patent Application Publication Tokukai No. 2005-310747

### Summary of Invention

### Technical Problem

However, as a result of studies by the inventors of the present invention, a problem of viscosity increases of an electrode mixture slurry was found in a case where an active material having a small particle size was used as a positive electrode active material.

The present invention has been made in view of the above problem, and an object of the present invention is to provide a binder composition that, while maintaining high adhesion, makes it possible to prevent or reduce viscosity increases of an electrode mixture slurry even in a case where an active material having a small particle size is used as a positive electrode active material.

### Solution to Problem

In order to attain the object, a binder composition according to an aspect of the present invention is a binder composition containing a vinylidene fluoride polymer, the binder composition containing, as the vinylidene fluoride polymer, a vinylidene fluoride homopolymer (A) and a vinylidene fluoride homopolymer (B) different from the vinylidene fluoride homopolymer (A), a ratio of the vinylidene fluoride homopolymer (A) in a total amount of the vinylidene fluoride homopolymer (A) and the vinylidene fluoride homopolymer (B) in the binder composition being 25 weight% or greater and 55 weight% or less, and the vinylidene fluoride homopolymer (A) and the vinylidene fluoride homopolymer (B) being polymers satisfying the following conditions (i) to (iii):
(i) a 5 weight% N-methyl-2-pyrrolidone solution of the vinylidene fluoride homopolymer (A) has a solution viscosity of 30 mPa·s or greater and 500 mPa·s or less at 25°C and a shear rate of 3.83 s⁻¹;
(ii) a 5 weight% N-methyl-2-pyrrolidone solution of the vinylidene fluoride homopolymer (B) has a solution viscosity of 800 mPa·s or greater and 30,000 mPa·s or less at 25°C and a shear rate of 3.83 s⁻¹; and
(iii) a 5 weight% N-methyl-2-pyrrolidone solution of a mixture of the vinylidene fluoride homopolymer (A) and the vinylidene fluoride homopolymer (B) that are mixed at a ratio identical to a ratio between the vinylidene fluoride homopolymer (A) and the vinylidene fluoride homopolymer (B) in the binder composition has a turbidity of 1 or less at 25°C.

### Advantageous Effects of Invention

According to a binder composition according to an aspect of the present invention, while maintaining high adhesion, it is possible to prevent or reduce viscosity increases of an electrode mixture slurry even in a case where an active material having a small particle size is used as a positive electrode active material.

### Description of Embodiments

The following description will discuss a binder composition according to an aspect of the present invention and an embodiment of a use of the binder composition.

### [Binder composition]

The binder composition according to the present embodiment is a composition that is used in an electrode in which an electrode mixture layer containing an electrode active material is formed on a current collector to bind the electrode active material to the current collector. The binder composition according to the present embodiment contains a vinylidene fluoride polymer. Further, the binder composition according to the present embodiment may be configured to further contain an electroconductive auxiliary agent.

### (Vinylidene fluoride polymer)

The binder composition according to the present embodiment contains, as the vinylidene fluoride polymer, a vinylidene fluoride homopolymer (A) having a low solution viscosity and a vinylidene fluoride homopolymer (B) having a high solution viscosity. Specifically, the vinylidene fluoride homopolymer (A) is a vinylidene fluoride homopolymer such that, in a case where an NMP solution obtained by (i) adding the vinylidene fluoride homopolymer (A) to N-methyl-2-pyrrolidone (hereinafter, NMP) so that the vinylidene fluoride homopolymer (A) will have a concentration of 5 weight%, and (ii) heating and stirring a resulting mixture at 50°C is separately prepared, the NMP solution has a solution viscosity of 30 mPa·s or greater and 500 mPa·s or less at 25°C. In contrast, the vinylidene fluoride homopolymer (B) is a vinylidene fluoride homopolymer such that, in a case where an NMP solution obtained by adding the vinylidene fluoride homopolymer (B) to NMP so that the vinylidene fluoride homopolymer (B) will have a concentration of 5 weight% is separately prepared, the NMP solution has a solution viscosity of 800 mPa·s or greater and 30,000 mPa·s or less at 25°C. Note here that the solution viscosity is a value measured with use of an E-type viscometer at 25°C and a shear rate of 3.83 s⁻¹.

In the following description, solution viscosities of NMP solutions of the polymers or mixtures (described later), the solution viscosities being measured as described above, are referred to as, for example, "a solution viscosity of the vinylidene fluoride homopolymer (A)", "a solution viscosity of the vinylidene fluoride homopolymer (B)", and "a solution viscosity of a mixture".

The vinylidene fluoride homopolymer (A) only needs to have a solution viscosity of 30 mPa·s or greater and 500 mPa·s or less. Note, however, that, in order to enhance electrode adhesion, the solution viscosity is preferably 40 mPa·s or greater, and more preferably 60 mPa·s or greater. The vinylidene fluoride homopolymer (A) that has a solution viscosity of 30 mPa·s or greater allows an electrode obtained with use of the present binder composition to have a higher tensile strength. This makes it possible to achieve high electrode adhesion. Further, in order to prevent or reduce slurry viscosity increases, the solution viscosity is preferably 450 mPa·s or less, and more preferably 200 mPa·s or less.

Such a vinylidene fluoride homopolymer (A) may be a commercially available product, or may be a newly synthesized product.

The vinylidene fluoride homopolymer (B) only needs to have a solution viscosity of 800 mPa·s or greater and 30,000 mPa·s or less. Note, however, that, in order to enhance electrode adhesion, the solution viscosity is preferably 1,000 mPa·s or greater, and more preferably 2,000 mPa·s or greater. Further, in order to prevent or reduce slurry viscosity increases, the solution viscosity is preferably 25,000 mPa·s or less, more preferably 10,000 mPa·s or less, and still more preferably 7,000 mPa·s or less.

Such a vinylidene fluoride homopolymer (B) may be a commercially available product, or may be a newly synthesized product.

In the binder composition in the present embodiment, a ratio of the vinylidene fluoride homopolymer (A) in a total amount of the vinylidene fluoride homopolymer (A) and the vinylidene fluoride homopolymer (B) in the binder composition is 25 weight% or greater and 55 weight% or less. In a case where the ratio of the vinylidene fluoride homopolymer (A) is 25 weight% or greater, it is possible to obtain an effect of preventing or reducing viscosity increases of a slurry. Further, in a case where the ratio of the vinylidene fluoride homopolymer (A) is 55 weight% or less, it is possible not only to obtain an effect of preventing or reducing viscosity increases of a slurry, but also to enhance adhesion and prevent a crack in a resulting electrode. In order to prevent or reduce slurry viscosity increases, the ratio of the vinylidene fluoride homopolymer (A) is preferably 30 weight% or greater, and more preferably 40 weight% or greater. Furthermore, in order to enhance adhesion, the ratio of the vinylidene fluoride homopolymer (A) is preferably 50 weight% or less, more preferably less than 50 weight%, and still more preferably 45 weight% or less.

Further, the vinylidene fluoride homopolymer (A) and the vinylidene fluoride homopolymer (B) in a preferable aspect of the binder composition of the present embodiment are used in a combination such that an NMP solution obtained by (i) separately preparing a mixture of the vinylidene fluoride homopolymer (A) and the vinylidene fluoride homopolymer (B) which are mixed at a ratio identical to a ratio between the vinylidene fluoride homopolymer (A) and the vinylidene fluoride homopolymer (B) in the binder composition, and (ii) adding the mixture to NMP so that the mixture will have a concentration 5 weight% has a solution viscosity (solution viscosity of the mixture) of 400 mPa·s or greater and 20,000 mPa·s or less at 25°C. The solution viscosity of the mixture is preferably 400 mPa·s or greater and 7,000 mPa·s or less, and more preferably 500 mPa·s or greater and 2,500 mPa·s or less. The binder composition that contains the vinylidene fluoride homopolymer (A) and the vinylidene fluoride homopolymer (B) at a ratio at which the solution viscosity of the mixture is in this range can achieve high adhesion as a binder composition.

Furthermore, the vinylidene fluoride homopolymer (A) and the vinylidene fluoride homopolymer (B) are used in a combination such that an NMP solution obtained by (i) separately preparing a mixture of the vinylidene fluoride homopolymer (A) and the vinylidene fluoride homopolymer (B) which are mixed at a ratio identical to a ratio between the vinylidene fluoride homopolymer (A) and the vinylidene fluoride homopolymer (B) in the binder composition, and (ii) adding the mixture to NMP so that the mixture will have a concentration 5 weight% has a turbidity of 1 or less at 25°C.

Note here that the turbidity is measured as follows. First, a mixture of polymers is added to NMP so that the mixture will have a concentration of 5 weight%, and a resulting mixture is heated and stirred at 50°C so as to prepare a vinylidene fluoride solution. The turbidity of the vinylidene fluoride solution thus obtained is measured by integrating-sphere photoelectric photometry with use of a turbidimeter.

Use of the vinylidene fluoride homopolymer (A) and the vinylidene fluoride homopolymer (B) in a combination such that a solution viscosity of a mixture at a predetermined mixing ratio has a turbidity of 1 or less not only allows the binder composition to have high adhesion but also makes it possible to prevent viscosity increases of a resulting electrode mixture slurry.

In the present specification, "prevent viscosity increases of an electrode mixture slurry" means that an electrode mixture is allowed to stand for 48 hours after being prepared, and a slurry viscosity measured after 48 hours have passed (measured by a B-type viscometer at 25°C) is 45,000 mPa·s or less.

Note that the binder composition preferably does not substantially contain a polymer other than the vinylidene fluoride homopolymer (A) and the vinylidene fluoride homopolymer (B).

### (Electroconductive auxiliary agent)

The binder composition according to the present embodiment may contain an electroconductive auxiliary agent in order to enhance electroconductivity of a resulting electrode mixture layer. Examples of the electroconductive auxiliary agent that can be used include carbonaceous materials such as a carbon nanotube, carbon black, graphite fine powder, and graphite fiber, graphene, and metal fine powder or metal fiber of, for example, nickel and aluminum. Among these, a carbon nanotube is preferable as the electroconductive auxiliary agent. Use of a carbon nanotube as the electroconductive auxiliary agent makes it possible to obtain an effect of preventing or reducing viscosity increases of a slurry, while maintaining high adhesion.

### (Solvent)

The binder composition may contain a solvent. The solvent can be identical to a solvent in an electrode mixture, and may be water, or may be a non-aqueous solvent. Examples of the non-aqueous solvent include NMP, N,N-dimethylformamide, N,N-dimethylacetamide, dimethylsulfoxide, N,N-dimethylsulfoxide, hexamethylphosphoramide, dioxane, tetrahydrofuran, tetramethylurea, triethylphosphate, trimethylphosphate, acetone, ethyl acetate, n-butyl acetate, n-butanol, dipropylene glycol monomethyl ether, propylene glycol monomethyl ether acetate, cyclohexanone, cyclohexane, and methyl ethyl ketone.

### (Preparation of binder composition)

The vinylidene fluoride homopolymer (A) and the vinylidene fluoride homopolymer (B) each of which satisfies a condition of a solution viscosity in a corresponding polymer are selected to prepare the binder composition. Next, a turbidity in a mixture at a desired ratio is measured, and a combination of the vinylidene fluoride homopolymer (A) and the vinylidene fluoride homopolymer (B) which combination satisfies a condition of turbidity is selected, so that the vinylidene fluoride homopolymer (A) and the vinylidene fluoride homopolymer (B) for use in the binder composition are determined. Then, by mixing the vinylidene fluoride homopolymer (A) and the vinylidene fluoride homopolymer (B) at a desired ratio, it is possible to prepare the binder composition. Furthermore, in a case where the binder composition contains the solvent and the electroconductive auxiliary agent, an order in which the vinylidene fluoride homopolymer (A), the vinylidene fluoride homopolymer (B), the solvent, and the electroconductive auxiliary agent are mixed is not particularly limited. For example, a mixture of the vinylidene fluoride homopolymer (A) and the vinylidene fluoride homopolymer (B) may be prepared, and the solvent may be added to the mixture. Alternatively, one of the vinylidene fluoride homopolymers may be added to the solvent, and the other of the vinylidene fluoride homopolymers may be added to a resulting mixture.

### [Electrode mixture]

An electrode mixture according to the present embodiment contains the binder composition according to the present embodiment and an electrode active material. The electrode mixture may further contain a solvent.

The electrode mixture according to the present embodiment can be made into an electrode mixture for a positive electrode or an electrode mixture for a negative electrode by changing a type of, for example, active material in accordance with, for example, a type of current collector to which the electrode mixture is to be applied. The binder composition according to the present embodiment can solve a problem of viscosity increases of an electrode mixture slurry, the problem occurring in a case where a positive electrode active material having a small particle size is used as an active material. Thus, the electrode mixture of the present embodiment is suitably used as an electrode mixture for a positive electrode.

### (Electrode active material)

A lithium composite metal oxide is typically used as a positive electrode active material. Examples of the lithium composite metal oxide include LiMnO₂, LiMn₂O₄, LiCoO₂, LiNiO₂, LiNiₓCo₁₋ₓO₂(0<x<1), LiNiₓCo_{y}Mn_{1-x-y}O₂(0<x<1, 0<y< 1), LiNiₓCo_{y}AlZO₂(0.55≤x<1, 0<y2<0.55, and 0<z<0.55, and x/(x+y+z)≥0.55), and LiFePO₄.

The binder composition according to the present embodiment can solve a problem of viscosity increases of an electrode mixture slurry, the problem occurring in a case where a positive electrode active material having a small particle size is used as an active material. More specifically, such a problem can occur in a case where a positive electrode active material has a primary particle size of 50 nm or greater and 600 nm or less, and has D10 of 1 pm or less and D50 of 1.6 pm or less in a volume-based particle size distribution. Thus, a positive electrode active material having a primary particle size of 50 nm to 600 nm, and having D10 of 1 pm or less and D50 of 1.6 pm or less in a volume-based particle size distribution is suitably used in the electrode mixture of the present embodiment. Note that a particle size of the positive electrode active material can be changed by a preparation method even in the case of an identical active material.

The primary particle size of the positive electrode active material is an average particle size in a long-axis diameter as measured by observation with use of a scanning electron microscope (SEM). The volume-based particle size distribution (D10 and D50) only needs to be measured with use of a laser diffraction scattering method.

Examples of a negative electrode active material that can be used include materials conventionally known in the art, such as carbon materials, metal and alloy materials, and metal oxides. Examples of the carbon materials include artificial graphite, natural graphite, non-graphitizable carbon, and graphitizable carbon.

### (Solvent)

The solvent may be a water or may be a non-aqueous solvent. Examples of the non-aqueous solvent include NMP, N,N-dimethylformamide, N,N-dimethylacetamide, dimethylsulfoxide, N,N-dimethylsulfoxide, hexamethylphosphoramide, dioxane, tetrahydrofuran, tetramethylurea, triethylphosphate, trimethylphosphate, acetone, ethyl acetate, n-butyl acetate, n-butanol, dipropylene glycol monomethyl ether, propylene glycol monomethyl ether acetate, cyclohexanone, cyclohexane, and methyl ethyl ketone. One type or two or more types of these solvents may be contained in the electrode mixture. The solvent may be added to the binder composition, or may be added separately from the binder composition.

### (Other component(s))

The electrode mixture in the present embodiment may contain an other component(s) provided that the other component(s) does/do not impair an effect of the present invention. Examples of the other component(s) include pigment dispersants such as polyvinylpyrrolidone, and dispersion stabilizers.

### (Preparation of electrode mixture)

The electrode mixture only needs to be obtained, for example, by mixing the binder composition of the present embodiment, the electrode active material, and the solvent so as to form a homogeneous slurry, and an order in which the binder composition, the electrode active material, and the solvent are mixed is not particularly limited. Furthermore, in a case where a binder composition containing a solvent is used as the binder composition, the electrode active material may be added before the solvent is added to the binder composition. For example, the electrode mixture may be obtained by adding the electrode active material to the binder composition, then adding the solvent, and stirring and mixing a resulting mixture. Further, the electrode mixture may be obtained by dispersing the electrode active material in the solvent, adding the binder composition to a resulting mixture, and stirring and mixing a resulting mixture. Alternatively, the electrode mixture may be obtained by adding the electrode active material to the binder composition that is a binder composition containing a solvent, and stirring and mixing a resulting mixture. Furthermore, mixing may be carried out a plurality of times. For example, secondary mixing may be carried out.

The electrode mixture contains the vinylidene fluoride homopolymer (A) and the vinylidene fluoride homopolymer (B) in a total amount of preferably 1 part by weight to 5 parts by weight, and more preferably 2 parts by weight to 3 parts by weight, relative to 100 parts by weight of the electrode active material.

### [Electrode]

An electrode according to the present embodiment includes, on a current collector, an electrode mixture layer formed from the electrode mixture. The "electrode" in, for example, the present specification means a battery electrode in which an electrode mixture layer formed from the electrode mixture of the present embodiment is formed on a current collector, unless otherwise specified.

### (Current collector)

The current collector is a substrate of the electrode and is a terminal for extracting electricity. Examples of a material for the current collector include iron, stainless steel, steel, copper, aluminum, nickel, and titanium. The current collector is preferably in foil or mesh form. In a case where the electrode is a positive electrode, the current collector is preferably carbon-coated aluminum foil. The current collector has a thickness of preferably 5 µm to 100 µm, and more preferably 5 µm to 20 µm.

### (Electrode mixture layer)

The electrode mixture layer is a layer obtained by applying the electrode mixture in slurry form to the current collector and drying the electrode mixture. A known method in the technical field can be used as a method for applying the electrode mixture, and examples thereof include a method in which a bar coater, a die coater, a comma coater, or the like is used. A drying temperature at which the electrode mixture layer is to be formed is preferably 50°C to 170°C, and more preferably 50°C to 150°C. The electrode mixture layer may be formed on both surfaces or only one of the surfaces of the current collector.

A thickness of the electrode mixture layer is ordinarily 20 pm to 600 pm, and more preferably 20 pm to 350 pm per surface. Further, the electrode mixture layer may be pressed so as to have a higher density. Furthermore, a weight per unit area on both surfaces of the electrode mixture layer is ordinarily 20 g/m² to 700 g/m², and preferably 30 g/m² to 500 g/m².

### (Property of electrode)

In a case where the electrode mixture for a positive electrode is used to obtain the electrode mixture layer, the electrode is a positive electrode. In a case where the electrode mixture for a negative electrode is used to obtain the electrode mixture layer, the electrode is a negative electrode. The electrode according to the present embodiment can be suitably used as a positive electrode of a non-aqueous electrolyte secondary battery such as a lithium-ion secondary battery.

### [Non-aqueous electrolyte secondary battery]

A non-aqueous electrolyte secondary battery of the present embodiment includes the electrode of the present embodiment. An other member(s) of the non-aqueous electrolyte secondary battery is/are not particularly limited. For example, a conventionally used member can be used. An aspect of the non-aqueous electrolyte secondary battery has a structure of a cylindrical battery in which a power generation element on which separators arranged and laminated between a positive electrode and a negative electrode are wound in coil form is housed in a metal casing. Another aspect of the non-aqueous electrolyte secondary battery can be a non-aqueous electrolyte secondary battery in other form, such as a coin-shaped, square-shaped, or paper-shaped non-aqueous electrolyte secondary battery.

Examples of a method for producing the non-aqueous electrolyte secondary battery include a method in which a negative electrode layer and a positive electrode layer are layered via a separator and placed in a battery container, an electrolyte is injected into the battery container, and the battery container is sealed.

Aspects of the present invention can also be expressed as follows:
A binder composition according to the present embodiment is a binder composition containing a vinylidene fluoride polymer, the binder composition containing, as the vinylidene fluoride polymer, a vinylidene fluoride homopolymer (A) and a vinylidene fluoride homopolymer (B) different from the vinylidene fluoride homopolymer (A), a ratio of the vinylidene fluoride homopolymer (A) in a total amount of the vinylidene fluoride homopolymer (A) and the vinylidene fluoride homopolymer (B) in the binder composition being 25 weight% or greater and 55 weight% or less, and the vinylidene fluoride homopolymer (A) and the vinylidene fluoride homopolymer (B) being polymers satisfying the following conditions (i) to (iii):
(i) a 5 weight% N-methyl-2-pyrrolidone solution of the vinylidene fluoride homopolymer (A) has a solution viscosity of 30 mPa·s or greater and 500 mPa·s or less at 25°C and a shear rate of 3.83 s⁻¹;
(ii) a 5 weight% N-methyl-2-pyrrolidone solution of the vinylidene fluoride homopolymer (B) has a solution viscosity of 800 mPa·s or greater and 30,000 mPa·s or less at 25°C and a shear rate of 3.83 s⁻¹; and
(iii) a 5 weight% N-methyl-2-pyrrolidone solution of a mixture of the vinylidene fluoride homopolymer (A) and the vinylidene fluoride homopolymer (B) that are mixed at a ratio identical to a ratio between the vinylidene fluoride homopolymer (A) and the vinylidene fluoride homopolymer (B) in the binder composition has a turbidity of 1 or less at 25°C.

The binder composition according to the present embodiment is preferably configured such that the vinylidene fluoride homopolymer (A) and the vinylidene fluoride homopolymer (B) are vinylidene fluoride homopolymers further satisfying the following condition (iv):
(iv) the 5 weight% N-methyl-2-pyrrolidone solution of the mixture has a solution viscosity of 400 mPa·s or greater and 25,000 mPa·s or less at 25°C and a shear rate of 3.83 s⁻¹.

The binder composition according to the present embodiment is preferably configured to further contain a carbon nanotube.

An electrode mixture according to the present embodiment is an electrode mixture containing: the binder composition described above; and a positive electrode active material having a primary particle size of 50 nm or greater and 600 nm or less, and having D10 of 1 pm or less and D50 of 1.6 pm or less in a volume-based particle size distribution.

An electrode according to the present embodiment is an electrode including, on a current collector, an electrode mixture layer formed from the electrode mixture described above.

A non-aqueous electrolyte secondary battery according to the present embodiment is a non-aqueous electrolyte secondary battery including the electrode described above.

The following description will more specifically discuss an embodiment of the present invention with reference to Examples. It is a matter of course that the present invention is not limited to the Examples below and that details of the present invention can have various aspects. Further, the present invention is not limited to the embodiments, but can be altered by a skilled person in the art within the scope of the claims. An embodiment derived from a proper combination of technical means disclosed in respective different embodiments is also encompassed in the technical scope of the present invention. Moreover, all the literatures described herein are hereby incorporated by reference.

### Examples

### [Measurement of particle size of positive electrode active material]

A primary particle size of LiFePO₄ (hereinafter, LFP) serving as a positive electrode active material used in the Examples below was measured by observation with use of SEM.

A particle size distribution of LFP was determined as follows. First, 0.1 g of a dispersant (cationic surfactant "SN-WET 366" (available from SAN NOPCO LIMITED)) was added to 0.01 g of an LFP sample, so that the dispersant was blended in the sample. Next, 20 mL of pure water was added and dispersed by an ultrasonic cleaner for approximately five minutes. Then, a particle size distribution in a range of a particle size of 0.1 µm to 1,000 µm was determined by a particle size distribution measurement device (MT3300EXII, available from Microtrac Inc.). Note that the dispersion medium was pure water and had a refractive index of 1.333. Particle sizes at which a volume-based cumulative frequency reaches 10% and 50% were calculated from the particle size distribution thus obtained, and were regarded as D10 and D50, respectively.

### [Example 1]

### (Preparation of electrode mixture)

A polymer mixture was prepared by mixing a vinylidene fluoride homopolymer "KF#850 (available from KUREHA CORPORATION)" (hereinafter, polymer (A1)) and a vinylidene fluoride homopolymer different from the polymer (A1) (hereinafter, polymer (B1)) so that a mixing ratio between the polymer (A1) and the polymer (B1) (polymer (A1):polymer (B1), weight ratio) would be 25:75.

Note here that the polymer B1 is a vinylidene fluoride homopolymer prepared as follows. First, 950 g of ion exchange water, 0.2 g of methylcellulose, 0.4 g of diisopropyl peroxydicarbonate (IPP), 1.3 g of ethyl acetate, and 440 g of vinylidene fluoride were placed in an autoclave having a capacity of 2 liters, and a temperature thereof was increased to 26°C so as to start polymerization. Thereafter, the temperature was increased to 40°C when a pressure was dropped by 0.5 MPa from a maximum pressure. Polymerization was ended at the elapse of 14 hours from the arrival of the temperature at 26°C. A resulting polymer slurry was heated at 95°C for 60 minutes, then dehydrated and washed with water, and dried at 80°C for 20 hours. As a result, a vinylidene fluoride polymer in powder form was obtained with a yield of 91%. The obtained vinylidene fluoride polymer had an inherent viscosity of 3.9 dL/g, and a 5 weight% N-methylpyrrolidone solution had a viscosity of 6,800 mPa·s.

The polymer mixture was added to NMP so that a resulting mixture would have 5 weight%, and the resulting mixture was heated and stirred at 50°C for three hours so as to prepare a polymer mixture NMP solution. The polymer mixture NMP solution was added to a carbon nanotube (CNT) dispersion liquid ("LB107" available from Cnano Technology, having a CNT diameter of 13 nm to 25 nm) as an electroconductive auxiliary agent, and a resulting mixture was mixed at 2,000 rpm for three minutes. To the mixture, LFP (having a primary particle size of 100 nm to 200 nm, D 10 of 0.7 µm, D50 of 1.4 µm, and a specific surface area of 19.9 m²/g) and NMP were added so as to achieve a solid content concentration of 57 weight%. An electrode mixture was obtained by carrying out secondary mixing at 2,000 rpm for five minutes. Respective weight ratios of an electrode active material, the electroconductive auxiliary agent, and the polymer mixture in the electrode mixture thus obtained are 100:2:2.

### [Example 2]

An electrode mixture was prepared as in the case of Example 1 except that the polymer (A1) was changed to a vinylidene fluoride homopolymer "KF#1100 (available from KUREHA CORPORATION)" (hereinafter, polymer (A2)) and that the mixing ratio between the polymer (A2) and the polymer (B1) was changed to 33:67.

### [Example 3]

A polymer mixture was prepared by mixing the polymer (A2) and a vinylidene fluoride homopolymer "KF#4300 (available from KUREHA CORPORATION)" (hereinafter, polymer (B2)) so that a mixing ratio between the polymer (A2) and the polymer (B2) would be 33:67.

The polymer mixture was added to NMP so that a resulting mixture would have 5 weight%, and the resulting mixture was heated and stirred at 50°C for three hours so as to prepare a polymer mixture NMP solution. Carbon black ("SuperP (registered trademark)" available from Timcal Ltd) as an electroconductive auxiliary agent was added to LFP identical to the LFP used in Example 1, and powder mixing was carried out. To a resulting powder mixture, the prepared polymer mixture NMP solution was added, and a resulting mixture was mixed at 2,000 rpm for three minutes. To the mixture, additional NMP was added so as to achieve a solid content concentration of 57 weight%. An electrode mixture was obtained by carrying out secondary mixing at 2,000 rpm for five minutes. Respective weight ratios of an electrode active material, an electroconductive auxiliary agent, and a polymer mixture in the electrode mixture thus obtained are 100:2:2.

### [Example 4]

An electrode mixture was prepared as in the case of Example 2 except that the polymer (B1) was changed to the polymer (B2).

### [Example 5]

An electrode mixture was prepared as in the case of Example 3 except that the mixing ratio between the polymer (A2) and the polymer (B2) was changed to 50:50.

### [Example 6]

An electrode mixture was prepared as in the case of Example 4 except that the mixing ratio between the polymer (A2) and the polymer (B2) was changed to 50:50.

### [Comparative Example 1]

An electrode mixture was prepared as in the case of Example 1 except that the polymer (A1) was changed to the polymer (A2) and that the polymer (B1) was changed to a vinylidene fluoride homopolymer "kynar (registered trademark) HSV900 (available from Arkema S.A.)" (hereinafter, polymer (B3)).

### [Comparative Example 2]

An electrode mixture was prepared as in the case of Example 1 except that not a mixture of two types of vinylidene fluoride homopolymers but only one type of vinylidene fluoride homopolymer (polymer (B2)) was used.

### [Comparative Example 3]

An electrode mixture was prepared as in the case of Example 3 except that the mixing ratio between the polymer (A2) and the polymer (B2) was changed to 80:20.

### [Comparative Example 4]

An electrode mixture was prepared as in the case of Example 6 except that the polymer (B2) was changed to a polymer (B4).

Note that the polymer (B4) is a copolymer of vinylidene fluoride, hexafluoropylene, and monomethyl maleate, the copolymer having been prepared as follows. First, 1,300 g of ion exchange water, 0.4 g of methylcellulose, 0.8 g of IPP, 380 g of vinylidene fluoride, 15 g of hexafluoropropylene, and 1.2 g of monomethyl maleate were placed in an autoclave having a capacity of 2 liters, and a temperature thereof was increased to 35°C so as to start polymerization. Thereafter, polymerization was ended when a pressure was dropped by 4.0 MPa from a maximum pressure. A polymerization time was 18 h. A resulting polymer slurry was heated at 95°C for 60 minutes, then dehydrated and washed with water, and dried at 80°C for 20 hours. As a result, a vinylidene fluoride polymer in powder form was obtained with a yield of 90%. The obtained vinylidene fluoride polymer had an inherent viscosity of 3.0 dL/g, and a 5 weight% N-methylpyrrolidone solution had a viscosity of 2,200 mPa·s.

### [Comparative Example 5]

An electrode mixture was prepared as in the case of Example 1 except that the polymer (A1) was changed to a vinylidene fluoride homopolymer "KF#1300 (available from KUREHA CORPORATION)" (hereinafter, polymer (A3)) and that the mixing ratio between the polymer (A3) and the polymer (B1) was changed to 20:80.

### [Evaluation Example 1. Measurement of solution viscosity]

The vinylidene fluoride polymer used in each of the Examples or Comparative Examples, or the polymer mixture obtained in each of the Examples or Comparative examples was added to NMP so that a resulting mixture would have 5 weight%. Thus, a 5 weight% NMP solution was prepared. An E-type viscometer "RE-215 type" available from Toki Sangyo Co., Ltd. was used to measure the prepared 5 weight% NMP solution for a solution viscosity at 25°C and a shear rate of 3.83 s⁻¹. Note that the viscosity was obtained such that the prepared NMP solution was in a standby state for 60 seconds after being placed in a measurement device, and then a rotor was rotated, so that a value obtained after 300 seconds was regarded as the solution viscosity.

Table 1 shows a result of measurement of the solution viscosity of each of polymers and polymer mixtures (polymer blends).

### [Evaluation Example 2. Measurement of turbidity]

The polymer mixture prepared in each of the Examples and Comparative Examples was added to NMP so that a resulting mixture would have 5 weight%, and the resulting mixture was heated and stirred at 50°C so as to prepare a 5 weight% NMP solution. The prepared 5 weight% NMP solution was stirred at 25°C. Immediately after stirring was stopped, a turbidimeter (NDH2000, available from NIPPON DENSHOKU INDUSTRIES CO., LTD.) was used to measure turbidity at 25°C. Table 1 shows a result of measurement of the turbidity.

### [Evaluation Example 3. Measurement of slurry viscosity]

A B-type viscometer ("DVS+" available from Brookfield AMETEK, Inc.) was used to measure a slurry viscosity of an electrode mixture at 25°C. Note that a certain amount of slurry that was placed in a poly-tube having a diameter of 1.2 cm, and was allowed to stand still and stored at 25°C and at a humidity of 10% or less was regarded as a measurement sample. In the present measurement, a spindle No. 64 was used to carry out preliminary stirring at a rotation speed of 0.5 rpm for one minute and subsequently at 1 rpm for two minutes. Thereafter, a viscosity measured at 30 seconds of stirring at 6 rpm was regarded as the slurry viscosity. Note that the viscosity was measured immediately after the sample was prepared and at 48 hours after the measurement sample started to be allowed to stand still and be stored. Table 1 shows a result of measurement of the slurry viscosity. In Table 1, "Initial" indicates the slurry viscosity measured immediately after preparation of the sample.

### [Evaluation Example 4. Measurement of peel strength]

The electrode mixture obtained in each of the Examples and Comparative Examples was applied with use of a bar coater to Al foil having a thickness of 15 pm, and heated and dried at 110°C for 30 minutes. Further, heat treatment was carried out at 130°C for one hour so as to prepare a one-side coated electrode having a one-side weight per unit area of 150 g/m².

The one-side coated electrode thus obtained was cut to a length of 50 mm and a width of 20 mm. In accordance with JIS K6854-1, a tensile tester ("STB-1225S", available from A&D Company, Limited) was used to carry out a 90-degree peel test at a head speed of 10 mm/min so as to measure a peel strength (gf/mm). In the present measurement, adhesion was determined to be good in a case where the peel strength was 0.7 gf/mm or greater, and adhesion was determined to be insufficient in a case where the peel strength was less than 0.7 gf/mm. Table 1 shows a result of measurement of the peel strength.

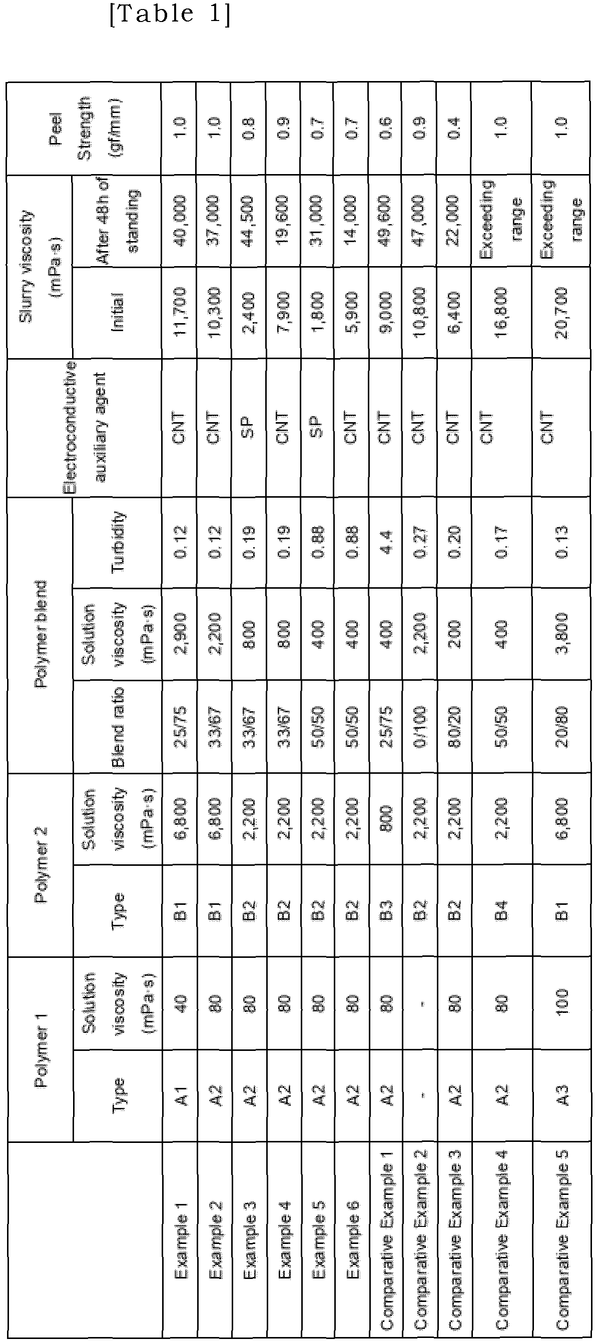

As shown in Table 1, in the electrode mixtures of Examples 1 to 6, though an electrode active material was an active material having a small particle size, viscosity increases of an electrode mixture slurry after 48 hours of standing of the electrode mixture was able to be prevented or reduced while high adhesion of a resulting electrode was maintained.

In contrast, in the electrode mixture of Comparative Example 1 having a turbidity of more than 1, the slurry viscosity was increased after 48 hours of standing of the electrode mixture. Further, in an electrode in which the electrode mixture of Comparative Example 1 was used, adhesion was insufficient. Furthermore, in the electrode mixture of Comparative Example 2, which electrode mixture was not a mixture of two types of vinylidene fluoride homopolymers, the slurry viscosity was increased after 48 hours of standing of the electrode mixture. Moreover, in an electrode in which the electrode mixture of Comparative Example 3, in which electrode mixture a ratio of a vinylidene fluoride homopolymer having a low viscosity was greater than 55 weight% was used, adhesion was insufficient, and a crack also occurred. In addition, in the electrode mixture of Comparative Example 4, in which electrode mixture a vinylidene fluoride polymer having a high viscosity was not a homopolymer of vinylidene fluoride but a copolymer, after 48 hours of standing of the electrode mixture, the slurry viscosity was increased to an unmeasurable degree. Similarly, also in the electrode mixture of Comparative Example 5, in which electrode mixture a ratio of a vinylidene fluoride homopolymer having a low viscosity was less than 25 weight%, after 48 hours of standing of the electrode mixture, the slurry viscosity was increased to an unmeasurable degree.

### Industrial Applicability

The present invention can be used for a non-aqueous electrolyte secondary battery.

## Claims

1. A binder composition comprising a vinylidene fluoride polymer,
the binder composition containing, as the vinylidene fluoride polymer, a vinylidene fluoride homopolymer (A) and a vinylidene fluoride homopolymer (B) different from the vinylidene fluoride homopolymer (A),
a ratio of the vinylidene fluoride homopolymer (A) in a total amount of the vinylidene fluoride homopolymer (A) and the vinylidene fluoride homopolymer (B) in the binder composition being 25 weight% or greater and 55 weight% or less, and
the vinylidene fluoride homopolymer (A) and the vinylidene fluoride homopolymer (B) being polymers satisfying the following conditions (i) to (iii):
(i) a 5 weight% N-methyl-2-pyrrolidone solution of the vinylidene fluoride homopolymer (A) has a solution viscosity of 30 mPa·s or greater and 500 mPa·s or less at 25°C and a shear rate of 3.83 s⁻¹;
(ii) a 5 weight% N-methyl-2-pyrrolidone solution of the vinylidene fluoride homopolymer (B) has a solution viscosity of 800 mPa·s or greater and 30,000 mPa·s or less at 25°C and a shear rate of 3.83 s⁻¹; and
(iii) a 5 weight% N-methyl-2-pyrrolidone solution of a mixture of the vinylidene fluoride homopolymer (A) and the vinylidene fluoride homopolymer (B) that are mixed at a ratio identical to a ratio between the vinylidene fluoride homopolymer (A) and the vinylidene fluoride homopolymer (B) in the binder composition has a turbidity of 1 or less at 25°C.

2. The binder composition according to claim 1, wherein the vinylidene fluoride homopolymer (A) and the vinylidene fluoride homopolymer (B) are vinylidene fluoride homopolymers further satisfying the following condition (iv):
(iv) the 5 weight% N-methyl-2-pyrrolidone solution of the mixture has a solution viscosity of 400 mPa·s or greater and 25,000 mPa·s or less at 25°C and a shear rate of 3.83 s⁻¹.

3. The binder composition according to claim 1 or 2, further comprising a carbon nanotube.

4. An electrode mixture comprising:
the binder composition described in any one of claims 1 to 3; and
a positive electrode active material having a primary particle size of 50 nm or greater and 600 nm or less, and having D10 of 1 pm or less and D50 of 1.6 pm or less in a volume-based particle size distribution.

5. An electrode comprising, on a current collector, an electrode mixture layer formed from the electrode mixture described in claim 4.

6. A non-aqueous electrolyte secondary battery comprising the electrode described in claim 5.
